# EUROPÄISCHE PATENTANMELDUNG

(11) **EP 1 792 701 A2**
(43) Veröffentlichungstag der Anmeldung: **06.06.2007**
(21) Anmeldenummer: 06011062.4
(22) Anmeldetag: 30.05.2006
(51) Int. Cl.: B29C 44/58, B29C 33/34

(54) **Formteilautomat mit drehbar gelagerter Form**

(30) Priorität: 05.12.2005 DE 202005019021 U
(71) Anmelder: Kurtz GmbH, 97907 Hasloch (DE)
(72) Erfinder: Reuber, Norbert, 97851 Bergrothenfels (DE); Gesuato, Stephan, 97877 Wertheim (Vockenrot) (DE)
(74) Vertreter: Böck, Bernhard

(57) **Zusammenfassung**

Formteilautomat mit drehbar gelagerter Form (01) zur Herstellung von Schaumstoffformteilen, wobei der Formteilautomat (01) zumindest eine Form aufweist und wobei die Form zumindest aus einem Formelement (04) einer ersten Gattung und einem Formelement (05) einer zweiten Gattung gebildet wird und wobei mindestens zwei Formelemente (03,04) der ersten Gattung vorgesehen sind und wobei die Formelemente (03,04) der ersten Gattung jeweils wechselweise an der Bildung der Form beteiligt sind und wobei die Formelemente (03,04) der ersten Gattung um eine gemeinsame Drehachse (06) herum angeordnet sind und wobei die Drehachse (06) am Formteilautomat (01) drehbar gelagert ist.

## Beschreibung

Die Erfindung betrifft einen Formteilautomaten zur Herstellung von Schaumstoffformteilen nach dem Oberbegriff des Hauptanspruchs.

Gattungsgemäße Formteilautomaten weisen häufig eine beispielsweise aus zwei Hälften bestehende Form auf. Dabei werden die zwei Formhälften während des Fertigungsprozesses des Formteils gegeneinander gedrückt. Während des Prozesses ist die eigentliche Form nicht unmittelbar zugänglich.

Um an der Form Nachbereitungen des letzten Prozesszyklus und Vorbereitungen für den nächsten Prozesszyklus treffen zu können muss zunächst das Ende des aktuellen Fertigungszyklus abgewartet werden. Erst nachdem das fertige Formteil der Form entnommen wurde ist die Form zur Nachbereitung und/oder Vorbereitung des letzten bzw. des nächsten Prozesszyklus unmittelbar zugänglich. Diese Zeitaufwände zur Nachbereitung und/oder Vorbereitung gehen voll in die Gesamtzykluszeit mit ein und senken die Produktivität des Formteilautomaten.

Aufgabe der vorliegenden Erfindung ist es einen neuen Formteilautomaten vorzuschlagen.

Diese Aufgabe wird durch die vorliegende Erfindung nach der Lehre des Hauptanspruchs gelöst.

Vorteilhafte Ausführungsformen der Erfindung sind Gegenstand der Unteransprüche.

Erfindungsgemäß wird das Problem dadurch gelöst, dass der Formteilautomat zur Herstellung von Schaumstoffformteilen zumindest eine Form aufweist, wobei die Form zumindest aus einem Formelement einer ersten Gattung und einem Formelement einer zweiten Gattung gebildet wird, und wobei mindestens zwei Formelemente der ersten Gattung vorgesehen sind, und wobei die Formelemente der ersten Gattung jeweils wechselweise an der Bildung der Form beteiligt sind, und wobei die Formelemente der ersten Gattung um eine gemeinsame Drehachse herum angeordnet sind, wobei die Drehachse am Formteilautomaten drehbar gelagert ist.

Bei der Herstellung von Schaumstoffformteilen wird häufig der Schaumstoff in einer Form ausgehärtet. Um den Zugang zur Form zu erleichtern besteht diese häufig aus mehreren Formelementen. Diese Formelemente können derart verbunden werden, dass sie zusammen eine Negativform für die Bildung des Formteils bilden. Dabei sind im Folgenden mit "Formelement" einzelne Abschnitte der Form bezeichnet, wohingegen mit "Formteil" das hergestellte Produkt bezeichnet wird.

Die Formelemente können beliebig ausgestaltet sein. Sie können beispielsweise die formgebende Kontur selbst darstellen, können aber auch einen Aufnahmerahmen zur Befestigung von formgebenden Konturen aufweisen und darüber hinaus integrierte Einrichtungen zur Leitung der Medien enthalten.

Die Form besteht häufig aus mehreren Formelementen, die auch als unterschiedliche Gattungen bezeichnet werden können. Eine Form wird dann zusammen aus jeweils einem Formelement einer Gattung gebildet. Eine Patrize kann beispielsweise eine erste Gattung darstellen und eine Matrize kann eine zweite Gattung darstellen.

Über die Gestaltung eines Formelements einer Gattung im Vergleich zu einem Formelement einer anderen Gattung ist damit noch nichts ausgesagt. Die Formelemente verschiedener Gattungen können identisch ausgestaltet sein, können spiegelsymmetrisch ausgestaltet sein und können aber auch verschieden ausgestaltet sein.

Am erfindungsgemäßen Formteilautomaten sind mindestens zwei Formelemente der ersten Gattung vorgesehen, wobei diese Formelemente jeweils wechselweise an der Bildung der Form beteiligt sind. In anderen Worten steht also eine an der Bildung der Form beteiligte Formelementgattung mehrfach für die Bildung dieser Form zur Verfügung. Auch die anderen an der Bildung der Form beteiligten Formelementgattungen könnten mehrfach zur Verfügung stehen.

Die Formelemente einer Gattung werden dann jeweils wechselweise an der Bildung der Form beteiligt. Dadurch ist während der Herstellung eines Schaumstoffformteils ein anderer Abschnitt der Form, der am nächsten Prozess beteiligt ist, zugänglich. Es können dann bereits während eines Herstellungsprozesses Vorbereitungen für den nächsten Herstellungsprozess getroffen:werden. Nachdem der aktuelle Herstellungsprozess beendet wurde, wird das bis dahin zugängliche Formelement anstelle eines Formelements gleichartiger Gattung an der Bildung der nächsten Form des nächsten Herstellungsprozesses beteiligt. Während der neue Herstellungsprozess anläuft, können Nachbereitungen des ersten Herstellungsprozesses erfolgen.

Dabei sind alle Arten von Vorbereitungen und Nachbereitungen denkbar. Bei den Vorbereitungen kann es sich beispielsweise um ein Bestücken mit einem Rohling und bei den Nachbereitungen beispielsweise um ein Entnehmen des fertigen Schaumstoffformteils handeln.

Die Formelemente der ersten Gattung sind um eine gemeinsame Drehachse herum angeordnet, wobei die Drehachse am Formteilautomaten drehbar gelagert ist. Dabei werden die Formelemente vorteilhafterweise symmetrisch um die Drehachse herum angeordnet. Bei zwei Formelementen der ersten Gattung werden die Formelemente beispielsweise beide mit ihren Rückseiten zueinander angeordnet.

Die Befestigung der Formelemente ist grundsätzlich beliebig. Bei lösbarer Befestigung können die Formelemente abgelöst und durch andere Formelemente einer anderen Gattung ersetzt werden, so dass sich im Ergebnis auch die Flexibilität eines solchen Formteilautomaten erhöht.

Bei einer derartigen Anordnung der Formelemente der ersten Gattung und bei drehbarer Lagerung der Drehachse am Formteilautomaten kann durch einfache Drehung der Drehachse somit ein Wechsel des Formelements einer Gattung erfolgen. Und zwar ist die oder sind die gerade nicht am Herstellungsprozesses beteiligten Formelemente der ersten Gattung durch die Drehbewegung um die gemeinsame Drehachse immer am selben Ort erreichbar.

Bei anderen Bewegungsarten wie beispielsweise einer translatorischen Einschiebebewegung kann nämlich das jeweils nicht am Herstellungsprozesses beteiligte Formelemente alternierend auf einer Seite des Formteilautomaten erreichbar sein. Daraus resultiert beim erfindungsgemäßen Formteilautomaten eine verbesserte Ergonomie, da der Bediener sich im wesentlichen immer am selben Ort aufhalten kann. Bei Einsatz eines automatischen Systems zur Vorbereitung und/oder Nachbereitung kommt der erfindungsgemäße Formteilautomat mit einem einzigen System aus. Auch kommt der erfindungsgemäße Formteilautomat mit einer geringeren Aufstellfläche aus.

In einer weiteren besonders vorteilhaften Ausführungsform weist der Formteilautomat eine drehbar gelagerte Haltevorrichtung auf, wobei die Formelemente der ersten Gattung an der Haltevorrichtung befestigbar sind. Die Ausbildung der Haltevorrichtung ist dabei grundsätzlich beliebig. Sie kann beispielsweise als am Formteilautomaten drehbar gelagerter Rahmen mit zwei gegenüberliegenden Achszapfen ausgestaltet sein.

Durch diese drehbare Ausführung eines Wechsels der Formelemente kann auch der Aufbau des Formteilautomaten im Wesentlichen relativ zu herkömmlichen Formteilautomaten unverändert bleiben. Somit ist im Ergebnis auch ein Nachrüsten durch Austausch des bisherigen Formelements der betreffenden Gattung durch eine beschriebene Drehvorrichtung möglich.

In einer weiteren vorteilhaften Ausführungsform sind zumindest die Formelemente der ersten Gattung in einem von außen leicht erreichbaren Bereich des Formteilautomaten angeordnet. Dann nämlich sind die Formelemente insbesondere mit ihrer die Form bildenden Seite beispielsweise für einen Bediener oder aber auch ein automatisch System zur Vorbereitung und/oder Nachbereitung leicht erreichbar. Bei der Vorund/oder Nachbereitung kann die Form nämlich weitestgehend direkt und ohne Hindernisse erreicht werden. Beispielsweise steht kein Rahmen des Formteilautomaten dazwischen und die Innenseite der Formelemente wird durch die Drehbewegung nach außen gekehrt.

In Verbindung mit um eine Drehachse angeordneten Formelementen und bei Anordnung der Drehachse in einem von außen leicht erreichbaren Bereich des Formteilautomaten wird diese vorteilhafte Wirkung noch einmal verstärkt. Dann nämlich wird stets zumindest ein Formelement um die Drehachse herum nach außen gedreht und kommt am selben Ort zum ruhen wie das vorherige Formelement. Dies ermöglicht im Ergebnis ein besonders ergonomisches Vorbereiten und/oder Nachbereiten der Form immer am selben von außen erreichbaren Ort.

In einer weiteren vorteilhaften Ausführungsform weisen die Formelemente jeweils eine Medienzuführeinrichtung für Prozessmedien auf. Derartige Medienzuführeinrichtungen können beispielsweise in Form einer Dampfkammer gebildet werden. Dampfkammern werden beispielsweise zur Aufschäumung von Rohlingen zu Schaumstoffformteilen verwendet. Derartige Dampfkammern sind jedoch auf die Zuführung bestimmter Prozessmedien angewiesen. Insbesondere die Zuleitung von Wasserdampf, dessen Ableitung und die Ableitung von Kondenswasser können erforderlich sein.

Um derartige Prozessmedien zur Verfügung stellen zu können weisen die Formelemente jeweils eine Medienzuführeinrichtung für diese Prozessmedien auf. Die Medienzuführeinrichtungen können auch zusammen mit dem jeweiligen Formelement um die Drehachse herum angeordnet werden oder an der Haltevorrichtung befestigt werden. Dann gehören die Medienzuführeinrichtungen zur Gruppe der bewegten Teile. Jedes Formelement weist seine eigene Medienzuführeinrichtung auf.

In einer weiteren vorteilhaften Ausführungsform weist der Formteilautomat eine Medienzuführeinrichtung für Prozessmedien auf, wobei am Formteilautomat eine Verbindungsvorrichtung vorgesehen ist, und wobei die Verbindungsvorrichtung die Medienzuführeinrichtung der Formelemente mit der Medienzuführeinrichtung des Formteilautomaten verbinden kann.

Die Medienzuführeinrichtung der wechselnden Formelemente muss nämlich jeweils nach Ausrichtung der Formelemente mit einer Medienzuführeinrichtung des Formteilautomaten verbunden werden. Dann kann im Ergebnis eine Medienzuführung zu den wechselnd bewegten Formelementen gewährleistet werden.

Die stationäre Medienzuführeinrichtung des Formteilautomaten kann über eine Verbindungsvorrichtung mit der Medienzuführeinriehtung des ausgerichteten Formelements verbunden werden. Die Ausführungsform dieser Verbindungsvorrichtung ist grundsätzlich beliebig. Sie sollte sich jedoch einfach und schnell lösen bzw. verbinden lassen, da ein relativ schneller Wechsel der Formelemente erwünscht ist. Ein Beispiel einer solchen Verbindungsvorrichtung ist ein bewegliches Teleskoprohr.

Die Betätigung der Verbindungsvorrichtung ist grundsätzlich beliebig. In einer besonders vorteilhaften Ausführungsform kann die Verbindungsvorrichtung hydraulisch und/oder pneumatisch betätigt werden. Dies bietet insbesondere den Vorteil, dass die Steuerung der Verbindungsvorrichtung in eine vollautomatische Prozessführung einbezogen werden kann. Darüber hinaus ist eine derartige Betätigung bei einem schnellen Wechsel der Formelemente ebenso schnell betätigbar und auch wieder lösbar.

In einer weiteren vorteilhaften Ausführungsform weist der Formteilautomat zumindest ein zweites Formelement der zweiten Gattung auf, wobei die Formelemente der ersten Gattung jeweils wechselweise zusammen mit dem ersten Formelement der zweiten Gattung und/oder mit dem zweiten Formelement der zweiten Gattung an der Bildung einer ersten Form und/oder einer zweiten Form beteiligt sind.

Bei einer derartigen Ausbildung eines Formteilautomaten mit mindestens einem zusätzlichen zweiten Formelement der zweiten Gattung weist der Formteilautomat zumindest zwei Formelemente der zweiten Gattung auf. Zusammen mit den mindestens zwei Formelementen der ersten Gattung, die um eine gemeinsame Drehachse herum angeordnet sind, ergeben sich somit in beliebiger Kombination mindestens zwei Formen, die jeweils zumindest aus einem Formelement der ersten Gattung und einem Formelement der zweiten Gattung gebildet werden.

Die Anzahl der Formelemente der ersten Gattung und die Anzahl der Formelemente der zweiten Gattung ist jedoch grundsätzlich beliebig. Es können grundsätzlich beliebig viele Formelemente der ersten Gattung um die gemeinsame Drehachse herum angeordnet werden. Ebenfalls können grundsätzlich beliebig viele, insbesondere der Anzahl der ersten Formelemente entsprechend viele, Formelemente der zweiten Gattung vorgesehen sein. Es ergeben sich daraus dann entsprechend viele Formen.

Jeweils ein Formelement der ersten Gattung und ein Formelement der zweiten Gattung ist an der Bildung einer Form beteiligt. Die Formelemente der ersten Gattung werden wechselweise mit den Formelementen der zweiten Gattung zusammengeführt. Dadurch wird die erste Form zunächst aus dem ersten Formelement der zweiten Gattung zusammen mit dem ersten Formelement der ersten Gattung gebildet während gleichzeitig oder später die zweite Form durch das zweite Formelement der zweiten Gattung zusammen mit dem zweiten Formelement der ersten Gattung gebildet wird. Die Anzahl von zwei Formelementgattungen ist hier nur exemplarisch erwähnt, eine Form kann auch mehr als zwei Formelementgattungen aufweisen. Nachfolgend kann dann die erste Form aus dem ersten Formelement der zweiten Gattung zusammen mit dem zweiten Formelement der ersten Gattung und gleichzeitig oder später die zweite Form aus dem zweitem Formelement der zweiten Gattung zusammen mit dem ersten Formelement der ersten Gattung gebildet werden. Bei mehr als zwei Formelementen je Gattung würde eine dritte bzw. vierte oder weitere Form in den Wechselzyklus miteinbezogen.

Besondere Vorteile eines derartigen Formteilautomaten ergeben sich dadurch, dass im Formteilproduktionszyklus zumindest ein Teil der einen Form auch Teil der anderen Form ist. So kann beispielsweise ein in der ersten Form vorbereitetes oder teilweise fertiggestelltes Formteil an einem Teil dieser ersten Form verbunden bleiben und in einem weiteren Produktionsabschnitt mit einem anderen Formelement weiterbehandelt werden. Während dieses Wechselvorgangs zumindest eines Formelements verbleibt das zuvor vorbereitete oder teilweise fertiggestellte Formteil an zumindest einem Formelement der ersten Form.

Eine derartige Vorgehensweise erspart ein Transferieren durch beispielsweise manuelles Herauslösen des vorbereiteten oder teilweise fertiggestellten Formteils aus der ersten Form und Einbringen in die zweite Form. Dadurch kann eine kürzere Zykluszeit erreicht werden, der Herstellungsprozess wird sicherer, wodurch wiederum die Teilequalität verbessert wird.

Die zeitliche Abfolge der Bildung der ersten und zweiten Form ist grundsätzlich beliebig. In einer besonders vorteilhaften Ausführungsform wird die erste Form und die zweite Form simultan gebildet. Dadurch lässt sich eine besonders kurze Zykluszeit erreichen. Es wäre aber ebenfalls realisierbar in einem ersten Schritt die erste Form und in einem zweiten Schritt die zweite Form zu bilden.

Die Ausgestaltung der Formelemente innerhalb einer Gattung ist grundsätzlich beliebig. In einer besonders vorteilhaften Ausführungsform sind mindestens zwei Formelemente innerhalb einer Gattung zumindest bezüglich ihrer Formgebung unterschiedlich ausgestaltet. Dadurch kann erreicht werden, dass das vorbereitete oder teilweise fertiggestellte Formteil nach der Übergabe in die zweite Form mit einem zumindest bezüglich seiner Formgebung unterschiedlich ausgestalteten Formelement weiterbehandelt wird.

So kann sich beispielsweise durch die unterschiedliche Formgebung der die zweite Form bildenden Formelemente eine bezüglich ihrer Formgebung sich von der ersten Formkavität unterscheidende zweite Formkavität ausbilden. So ist es möglich, dass die zweite Formkavität bezüglich ihres Volumens größer ausgebildet wird als die erste Formkavität. Das zusätzliche Volumen kann dann mit einem zweiten Schaum ausgeschäumt werden, so dass das entstehende Formteil zwei Schaumstoffabschnitte aufweist.

Die Beschaffenheit der Schaumstoffabschnitte ist grundsätzlich beliebig. Die Schaumstoffabschnitte können von gleicher oder vergleichbarer Konsistenz sein, sie können sich aber auch beispielsweise bezüglich ihrer Dichte oder Farbe unterscheiden.

Wie viele Formelemente innerhalb einer Gattung sich zumindest bezüglich ihrer Formgebung unterscheiden ist grundsätzlich beliebig. Es können sich alle Formelemente innerhalb einer Gattung zumindest bezüglich ihrer Formgebung unterscheiden, es können aber auch einige bezüglich ihrer Formgebung gleiche oder vergleichbare Formelemente innerhalb einer Gattung und zusätzlich innerhalb derselben Gattung zumindest bezüglich ihrer Formgebung unterschiedlich ausgestaltete Formelemente vorgesehen sein. Weiterhin ist es möglich auch eine Unterscheidung zumindest bezüglich der Formgebung innerhalb der ersten und zusätzlich innerhalb der zweiten Gattung vorzusehen.

Ob die Unterscheidung an den um die gemeinsame Drehachse herum angeordneten Formelementen der ersten Gattung oder an den Formelementen der zweiten Gattung vorgesehen ist ist grundsätzlich beliebig.

Einige Ausführungsformen der Erfindung sind in den Zeichnungen dargestellt und werden nachfolgend beispielhaft erläutert.

Es zeigen:
- **Fig. 1**: einen ersten Formteilautomat in perspektivischer Ansicht;
- **Fig. 2**: drehbare Haltevorrichtung eines Formteilautomaten gemäß **Fig. 1** und **Fig. 5** in perspektivischer Ansicht;
- **Fig. 3**: Formteilautomat gemäß **Fig. 1** in seitlicher Ansicht;
- **Fig. 4**: Verbindungsvorrichtung eines Formteilautomaten gemäß **Fig. 1** und **Fig. 5** in seitlicher Ansicht.
- **Fig. 5**: einen zweiten Formteilautomaten in seitlicher Ansicht;
- **Fig. 6**: Formelemente mit Formteilen eines Formteilautomaten gemäß **Fig. 5**;
- **Fig. 7**: Formelemente gemäß **Fig. 6** in einem ersten Abschnitt eines Formteil-Herstellungsprozesses;
- **Fig. 8**: Formelemente gemäß **Fig. 6** in einem zweiten Abschnitt eines Formteil-Herstellungsprozesses;
- **Fig. 9**: Formelemente gemäß **Fig. 6** in einem dritten Abschnitt eines Formteil-Herstellungsprozesses;
- **Fig. 10**: Formelemente gemäß **Fig. 6** in einem vierten Abschnitt eines Formteil-Herstellungsprozesses;
- **Fig. 11**: Formelemente gemäß **Fig. 6** in einem fünften Abschnitt eines Formteil-Herstellungsprozesses;
- **Fig. 12**: Formelemente gemäß **Fig. 6** in einem sechsten Abschnitt eines Formteil-Herstellungsprozesses;
- **Fig. 13**: Formelemente gemäß **Fig. 6** in einem siebten Abschnitt eines Formteil-Herstellungsprozesses;
- **Fig. 14**: Formelemente gemäß **Fig. 6** in einem achten Abschnitt eines Formteil-Herstellungsprozesses.

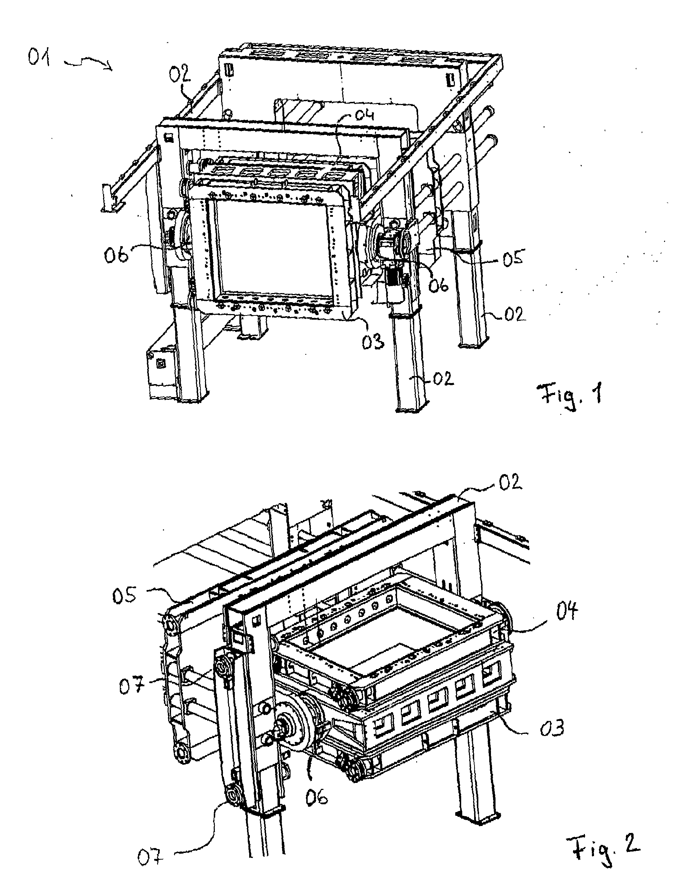

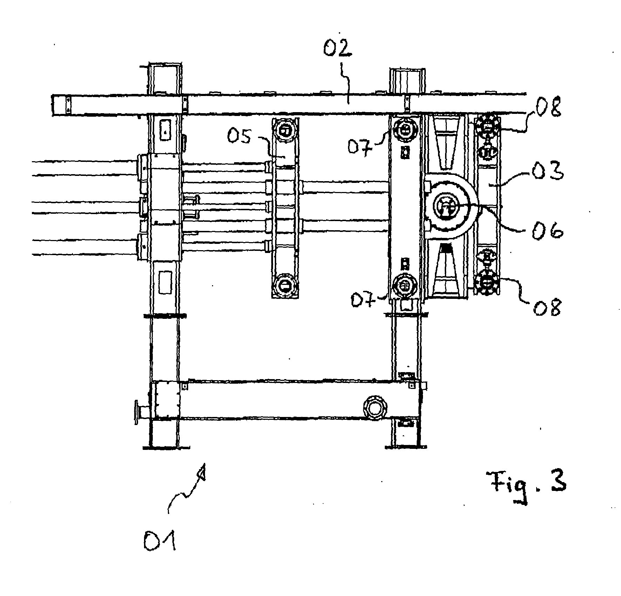

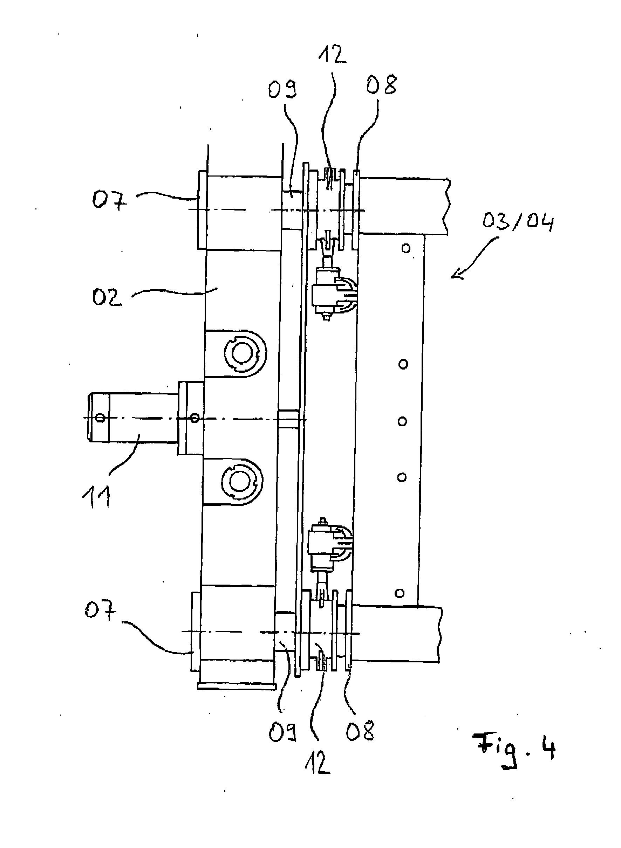

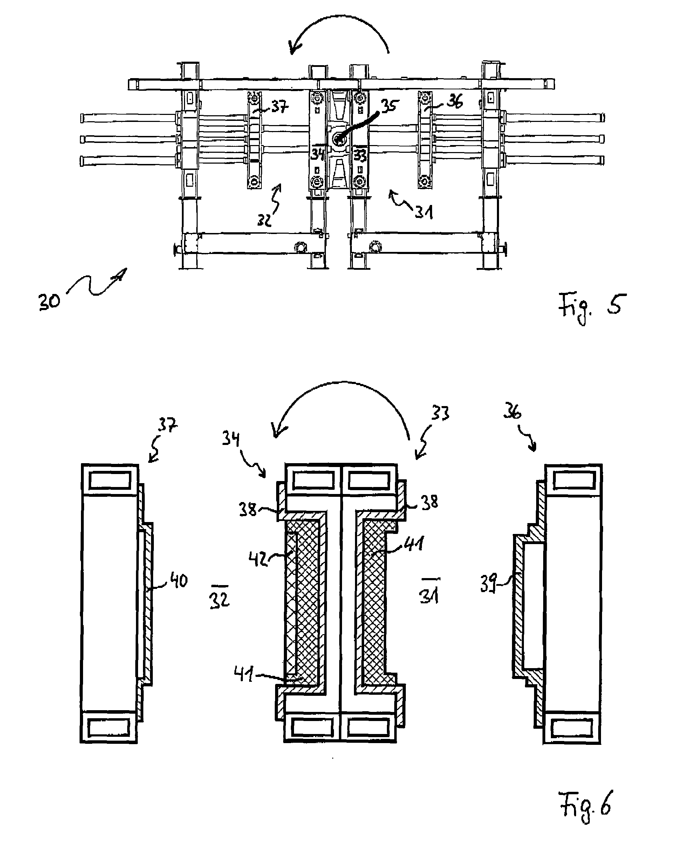

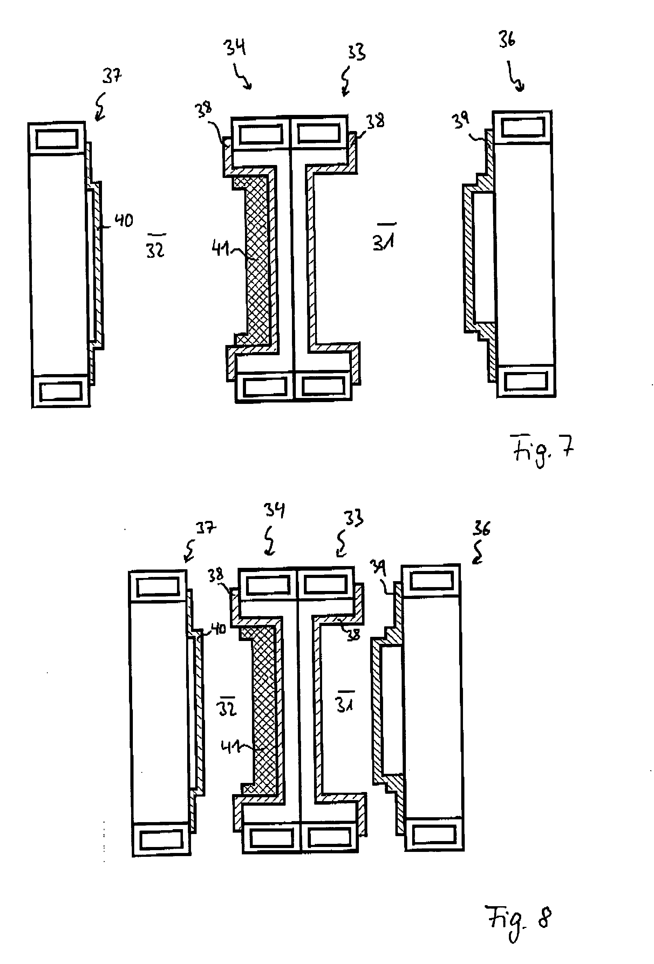

**Fig. 1** zeigt einen Formteilautomaten 01 in perspektivischer Ansicht. Der Formteilautomat 01 weist einen Rahmen 02, ein erstes Formelement 03 einer ersten Gattung, ein zweites Formelement 04 der ersten Gattung sowie ein Formelement 05 einer zweiten Gattung auf. Die Formelemente 03, 04 der ersten Gattung sind um eine gemeinsame Drehachse 06 angeordnet, die am Rahmen 02 des Formteilautomaten 01 drehbar gelagert ist.

In diesem Ausführungsbeispiel sind die Formelemente als Aufnahmerabmen zur Befestigung von formgebenden Konturen ausgebildet und weisen darüber hinaus integrierte Einrichtungen zur Leitung der Medien auf.

Die in **Fig. 1** dargestellte senkrechte Position ist in dieser Ausführungsform die Arbeitsposition. Dabei kann das zweite Formelement 04 der ersten Gattung mit dem Formelement 05 der zweiten Gattung zusammen zur Form verbunden werden. Während die Form geschlossen ist und dem Prozess unterzogen wird ist das erste Formelement 03 der ersten Gattung von außen her problemlos zugänglich. Die Formelemente 03, 04 der ersten Gattung sind nämlich in einem von außen leicht erreichbaren Bereich des Formteilautomaten 01 angeordnet.

Während das zweite Formelement 04 der ersten Gattung in den Schäumprozess einbezogen ist können am ersten Formelement 03 der ersten Gattung Vorbereitungen getroffen werden. Beispielsweise können zur Einschäumung vorgesehene Rohlinge an dem Formelement angebracht werden.

Nachdem der aktive Herstellungsprozess beendet ist werden die Formelemente 04, 05 getrennt. Dabei fährt das Formelement 05 der zweiten Gattung geradlinig zurück. Es erfolgt eine Drehung der Formelemente 03, 04 der ersten Gattung um die Drehachse 06 herum um 180°. Der Drehsinn der Drehachse 06 ist grundsätzlich beliebig. Nun befindet sich das vorbereitete Formelement 03 der ersten Gattung zur Bildung der Form bereit an der selben Stelle wie zuvor das Formelement 04 der ersten Gattung. Dazu wird das Formelement 05 der zweiten Gattung auf das Formelement 03 der ersten Gattung zu bewegt und mit diesem verbunden.

Währenddessen befindet sich das Formelement 04 der ersten Gattung von außen erreichbar nun an der Stelle des Formelements 03 der ersten Gattung. Das fertige Schaumstoffformteil kann in einem Nachbereitungsschritt entnommen werden und eine erneute Bestückung kann erfolgen.

**Fig. 2** zeigt die drehbaren Formelemente 03, 04 der ersten Gattung in perspektivischer Ansicht im Detail. Zu erkennen ist, dass die Formelemente 03, 04, 05 jeweils eine Dampfkammer als Medienzuführeinheit aufweisen. Bestandteil der Dampfkammern sind jeweils Zu- und Abgänge für Wasserdampf und Wasser. Durch die wechselweise Drehbewegung der Formelemente 03, 04 um die Drehachse 06 müssen die Anschlüsse der Dampfkammer nach Ausrichtung der Formelemente mit der Zuführeinrichtung 07 des Formteilautomaten 01 verbunden werden.

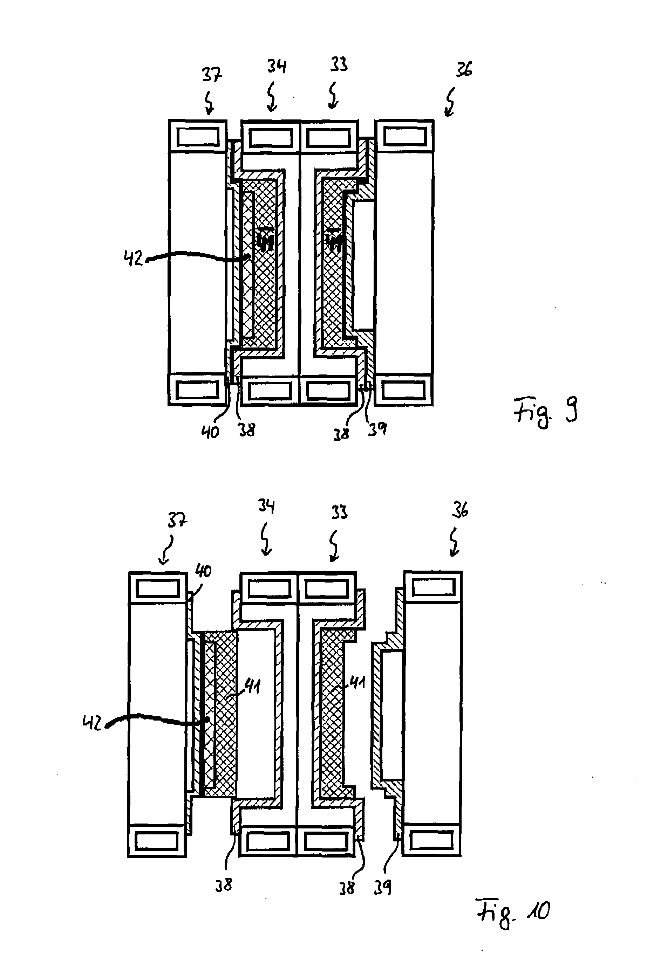

**Fig. 3** zeigt einen Formteilautomaten gemäß **Fig. 1** in seitlicher Ansicht. Das Formelement 04 der ersten Gattung ist hier verdeckt durch den Rahmen 02. Formelement 03 und 04 der ersten Gattung rotieren wie bekannt im Wechsel um die Drehachse 06. Dabei befindet sich jeweils die Medienzuführeinrichtung 08 eines der Formelemente 03, 04 der ersten Gattung direkt vor der Medienzuführeinrichtung 07 des Formteilautomaten. Es wird also wechselweise die Medienzuführeinrichtung 08 eines der Formelemente 03, 04 der ersten Gattung mit der Medienzuführeinrichtung 07 des Formteilautomaten verbunden. Die Verbindung der Zuführeinrichtungen des Formelements 05 der zweiten Gattung kann wie bekannt erfolgen.

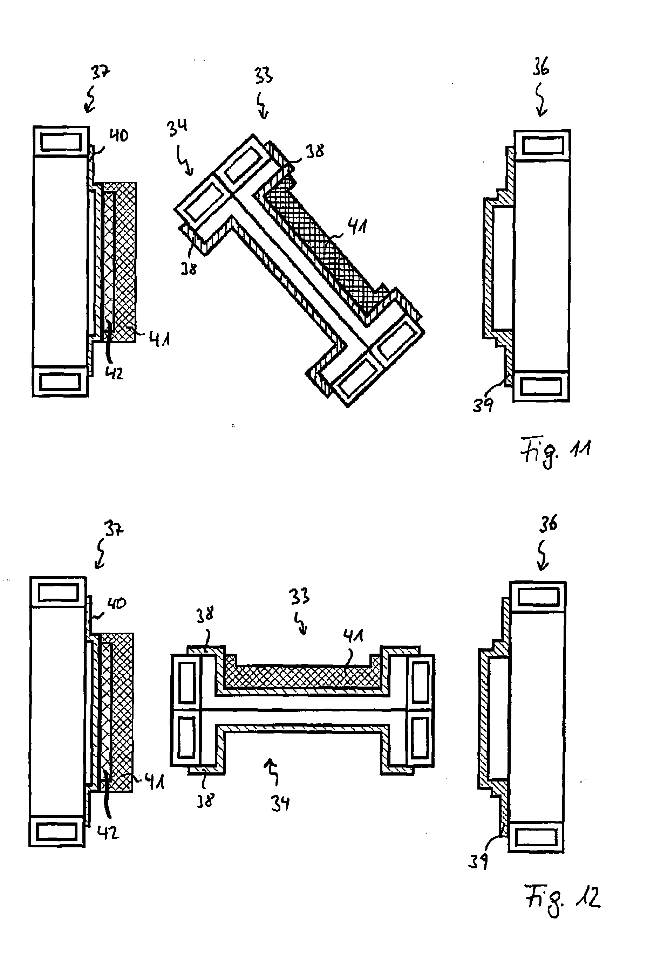

**Fig. 4** zeigt eine Verbindungseinrichtung eines Formteilautomaten gemäß **Fig. 1** zwischen den Medienzuführeinrichtungen 07, 08 des Formteilautomaten und des Formelements im Detail in seitlicher Ansicht. Eines der Formelemente 03, 04 der ersten Gattung befindet sich im ausgerichteten Zustand direkt am Rahmen 02 des Formteilautomaten. Somit stehen sich im Ergebnis in dieser Ausführungsform der Erfindung die Medienzuführeinrichtung 07 des Formteilautomaten und die Medienzuführeinrichtung 08 des betreffenden Formelements direkt gegenüber. Die Medienzuführeinrichtung 07 des Formteilautomaten ist als durchgängige Rohrverbindung durch den Rahmen 02 ausgestaltet.

Zur Verbindung der Medienzuführeinrichtungen 07 des Formteilautomaten mit der Medienzuführeinrichtung 08 des betreffenden Formelements ist hier jeweils ein verschiebbares Rohr 09 als Bestandteil der Verbindungsvorrichtung vorgesehen. Das verschiebbare Rohr 09 lässt sich jeweils über eine Betätigungsplatte 10 bewegen. Die Betätigungsplatte 10 wird über die Hydraulik 11 betätigt.

Die Verbindung der Medienzuführeinrichtung 07 des Formteilautomaten mit der Medienzuführeinrichtung 08 des betreffenden Formelements kann nun über eine Verschlusseinrichtung 12 gesichert werden. Die Verschlusseinrichtung 12 kann beispielsweise pneumatisch oder auch elektrisch betätigbare Klappen aufweisen.

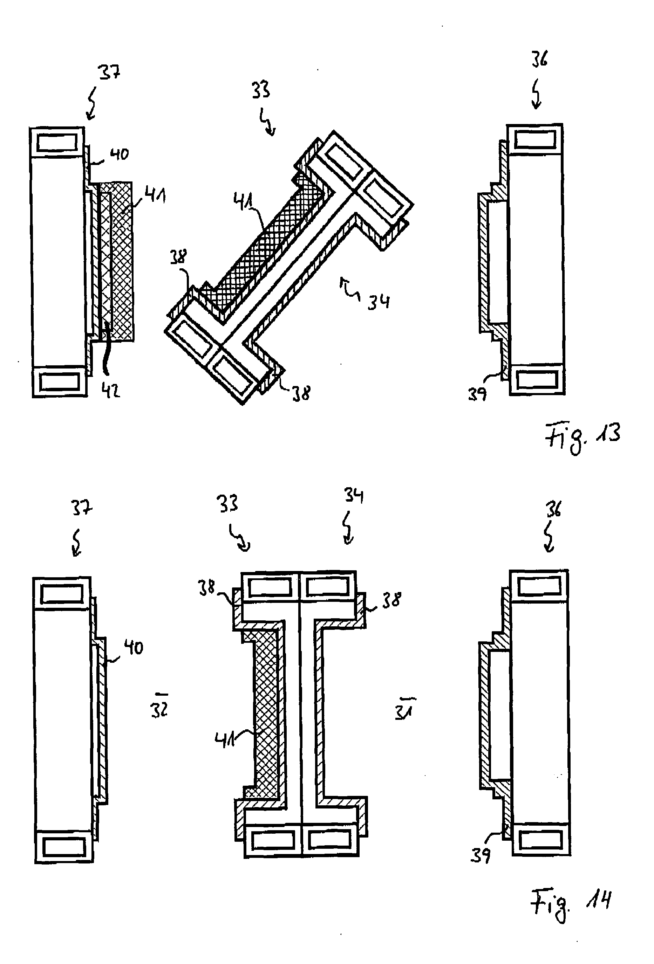

**Fig. 5** zeigt einen weiteren Formteilautomaten 30 mit einer ersten Form 31 und einer zweiten Form 32. Weiterhin weist der Formteilautomat 30 ein erstes Formelement 33 einer ersten Gattung und ein zweites Formelement 34 der ersten Gattung auf, die um eine gemeinsame Drehachse 35 herum angeordnet sind, wobei die Drehachse 35 am Formteilautomaten 30 drehbar gelagert ist. Für die Verbindung der Formelemente 33, 34 mit der Drehachse 35 wird vollinhaltlich auf die Ausführungen zu den **Figuren 1.** bis **4** verwiesen.

Weiterhin weist der Formteilautomat 30 ein erstes Formelement 36 einer zweiten Gattung sowie ein zweites Formelement 37 der zweiten Gattung auf.

An der Bildung der Formen 31 und 32 ist jeweils zumindest ein Formelement der ersten Gattung und ein Formelement der zweiten Gattung beteiligt. Die Formelemente sind derart angeordnet, dass durch eine Transversalverschiebung der Formelemente 36, 37 in Richtung auf die Formelemente 33, 34 sich die zwei Formen 31, 32 ergeben.

Die Formelemente 33, 34 können durch Rotation um ihre Drehachse 35 ihre Positionen tauschen. Dadurch ist an der Bildung der ersten Form 31 das Formelement 36 und wechselweise das Formelement 33 oder 34 beteiligt und an der Bildung der zweiten Form 32 ist das Formelelement 37 und wechselweise das Formelement 34 oder 33 beteiligt.

Die Formen 31, 32 können dabei zeitgleich also simultan gebildet werden oder die Formen 31, 32 werden zeitlich versetzt gebildet. Dies kann beispielsweise durch zeitversetztes transversales Verschieben der Formelemente 36, 37 erreicht werden.

Die Rotationsrichtung der Formelemente 33, 34 um die Drehachse 35 ist grundsätzlich beliebig. Die Formelemente 33, 34 können kontinuierlich im Uhrzeigersinn um die Drehachse 35 herumrotieren, sie können kontinuierlich gegen den Uhrzeigersinn um die Drehachse 35 herumrotieren, sie können beispielsweise aber auch alternierend mit und gegen den Uhrzeigersinn um die Drehachse 35 herumrotieren.

**Fig. 6** zeigt die Formelemente 33, 34, 36, 37 des Formteilautomaten 30 gemäß **Fig. 5**. Die gemeinsam rotierbaren Formelemente 33, 34, sind als Matrizen ausgestaltet und weisen jeweils eine Haube 38 auf.

Die Formelemente 36, 37 sind hingegen als Patrizen ausgestaltet und weisen einen Kern 39, 40 auf. Der erste Kern 39 des Formelements 36 unterscheidet sich bezüglich seiner Formgebung vom zweiten Kern 40 des Formelements 37. Somit sind die Formelemente 36, 37 der zweiten Gattung bezüglich ihrer Formgebung unterschiedlich ausgestaltet. Die Hauben 38 der Formelemente 33, 34 sind hingegen in diesem Ausführungsbeispiel bezüglich ihrer Formgebung gleich ausgestaltet.

Grundsätzlich könnte der Formteilautomat auch zwei gleiche Kerne und zwei unterschiedliche Hauben aufweisen. Ebenfalls beliebig ist ob die Hauben oder die Kerne rotierbar in der Mitte der Anordnung vorgesehen sind.

In diesem Ausführungsbeispiel ergibt sich aufgrund der unterschiedlichen Formgebung der Kerne 39 und 40 ein unterschiedliches Kavitätsvolumen in den Formen 31 und 32. Das Volumen der Form 31 ist in diesem Ausführungsbeispiel geringer als das Volumen der Form 32. Die Form 31 ist daher geeignet zur Herstellung eines ersten Formteilabschnitts 41. Die zweite Form 32 weist aufgrund des unterschiedlichen Kerns 40 ein größeres Volumen als die Form 31 auf und ist zur Herstellung eines zweiten Formteilabschnitts 42 geeignet. Die Formteilabschnitte 41, 42 können sich beispielsweise durch Konsistenz, Dichte und Farbe unterscheiden und sind fest miteinander verbunden.

**Fig. 7** bis **14** zeigen einen Herstellungsprozess eines derartigen Formteils mit zwei Formteilabschnitten 41, 42.

**Fig. 7** zeigt einen bereits ausgeschäumten ersten Formteilabschnitt 41 in der Haube 38 des Formelements 34. Der erste Formteilabschnitt 41 ist bereits ausgeschäumt und stabilisiert.

Wie in **Fig. 8** dargestellt werden dann die Formen 31, 32 simultan geschlossen. Dies erfolgt durch eine Transversalbewegung der Formelemente 36, 37 in Richtung auf die Formelemente 33, 34. Die Form 31 ergibt sich aus den Formelementen 33, 36 und die Form 32 ergibt sich aus den Formelementen 34, 37.

In **Fig. 9** sind die Formen 31 und 32 geschlossen, der Übersicht halber jedoch nicht bezeichnet. Zu erkennen sind hier die bezüglich ihrer Formgebung unterschiedlichen Formkavitäten. Die unterschiedliche Formgebung rührt von den unterschiedlichen Kernen 39, 40 her.

Während die Formen 31, 32 geschlossen sind werden sie ausgeschäumt. Die rechte Form 31 ist ursprünglich leer gewesen und wird mit einem ersten Formteilabschnitt 41 ausgeschäumt. Die linke Form 32 war ursprünglich mit dem ersten Formteilabschnitt 41 befüllt und wird nun mit dem zweiten Formteilabschnitt 42 ausgeschäumt. Aufgrund des flacher ausgestalteten Kerns 40 ergibt sich in der Form 32 eine großvolumigere Kavität.

Nachdem die zwei Formen 31, 32 vollständig ausgeschäumt und stabilisiert worden sind werden sie wieder wie in **Fig. 10** dargestellt geöffnet. Dabei verbleibt der soeben hergestellte erste Formteilabschnitt 41 in der Haube 38 des Formelements 33 und der in der linken Form 32 hergestellte Verbund aus erstem Formteilabschnitt 41 und zweitem Formteilabschnitt 42 verbleibt am Kern 40 des Formelements 37.

Die Formelemente 36 und 37 werden transversal von den Formelementen 33, 34 wegbewegt und somit die Formen 31, 32 wieder freigegeben.

Sodann erfolgt wie in **Fig. 11** dargestellt die Rotation der Formelemente 33, 34 zusammen mit dem immer noch sich in der Haube 38 des Formelements 33 befindlichen ersten Formteilabschnitts 41. Der Verbund aus erstem Formteilabschnitt 41 und zweitem Formteilabschnitt 42 verbleibt weiterhin am Kern 40 des Formelements 37.

Sodann wie in **Fig. 12** dargestellt die Rotation der Formelemente 33, 34 zusammen mit dem immer noch sich in der Haube 38 des Formelements 33 befindlichen ersten Formteilabschnitts 41. Der Verbund aus erstem Formteilabschnitt 41 und zweitem Formteilabschnitt 42 verbleibt weiterhin am Kern 40 des Formelements 37.

Sodann wie in **Fig. 13** dargestellt die Rotation der Formelemente 33, 34 zusammen mit dem immer noch sich in der Haube 38 des Formelements 33 befindlichen ersten Formteilabschnitts 41. Der Verbund aus erstem Formteilabschnitt 41 und zweitem Formteilabschnitt 42 verbleibt weiterhin am Kern 40 des Formelements 37.

Zum Schluss der Rotation befindet sich wie in **Fig. 14** dargestellt das Formelement 33 an der Stelle des Formelements 34 und umgekehrt. Der erste Formteilabschnitt 41 in der Haube 38 des Formelements 33 nimmt nun die Stelle des ersten Formteilabschnitts 41, wie in Fig. 7 am Anfang des Herstellungsprozesses, ein und wird im nächsten Prozessschritt der gemäß **Fig. 8 ff.** erfolgt weiterbehandelt. Der Verbund aus erstem Formteilabschnitt 41 und zweitem Formteilabschnitt 42 am Kern 40 des Formelements 37 wurde entnommen. Die erste Form 31 wird nun im nächsten Prozessschritt aus den Formelementen 34 und 36 und die Form 32 wird in folgenden Prozessschritten aus den Formelementen 33 und 37 gebildet. Die Bildung der Formen 31, 32 vollzieht sich wechselweise so weiter.

## Patentansprüche

1. Formteilautomat (01, 30) zur Herstellung von Schaumstoffformteilen, wobei der Formteilautomat (01, 30) zumindest eine Form (31) aufweist, und wobei die Form (31) zumindest aus einem Formelement (04, 33) einer ersten Gattung und einem Formelement (05, 36) einer zweiten Gattung gebildet wird, und wobei mindestens zwei Formelemente (03, 04, 33, 34) der ersten Gattung vorgesehen sind, und wobei die Formelemente (03, 04, 33, 34) der ersten Gattung jeweils wechselweise an der Bildung der Form (31) beteiligt sind,
**dadurch gekennzeichnet,**
**dass** die Formelemente (03, 04, 33, 34) der ersten Gattung um eine gemeinsame Drehachse (06, 35) herum angeordnet sind, wobei die Drehachse (06, 35) am Formteilautomaten (01, 30) drehbar gelagert ist.

2. Formteilautomat nach Anspruch 1,
**dadurch gekennzeichnet,**
**dass** der Formteilautomat (01, 30) eine drehbar gelagerte Haltevorrichtung aufweist, wobei die Formelemente (03, 04, 33, 34) der ersten Gattung an der Haltevorrichtung befestigbar sind.

3. Formteilautomat nach Anspruch 1 oder 2,
**dadurch gekennzeichnet,**
**dass** die Drehachse (06, 35) horizontal angeordnet ist.

4. Formteilautomat nach einem der Ansprüche 1 bis 3,
**dadurch gekennzeichnet,**
**dass** zumindest die Formelemente (03, 04, 33, 34) der ersten Gattung in einem von außen leicht erreichbaren Bereich des Formteilautomaten (01, 30) angeordnet sind.

5. Formteilautomat nach einem der Ansprüche 1 bis 4,
**dadurch gekennzeichnet,**
**dass** zumindest die Formelemente (03, 04, 33, 34) der ersten Gattung wechselweise in einen von außen gut zugänglichen Bereich des Formteilautomaten (01, 30) eingeschwenkt werden können.

6. Formteilautomat nach einem der Ansprüche 1 bis 5,
**dadurch gekennzeichnet,**
**dass** die Formelemente (03, 04, 33, 34) jeweils eine Zuführeinrichtung (08) für Prozessmedien aufweisen.

7. Formteilautomat nach Anspruch 6,
**dadurch gekennzeichnet,**
**dass** der Formteilautomat (01, 30) eine Zuführeinrichtung (07) für Prozessmedien aufweist, wobei am Formteilautomat (01, 30) eine Verbindungsvorrichtung (09, 10) vorgesehen ist, und wobei die Verbindungsvorrichtung (09, 10) die Zuführeinrichtung (08) der Formelemente mit der Zuführeinrichtung (07) des Formteilautomaten (01, 30) verbinden kann.

8. Formteilautomat nach Anspruch 7,
**dadurch gekennzeichnet,**
**dass** die Verbindungsvorrichtung (09, 10) hydraulisch und/oder pneumatisch betätigt werden kann.

9. Formteilautomat nach einem der Ansprüche 1 bis 8,
**dadurch gekennzeichnet,**
**dass** der Formteilautomat (30) zumindest ein zweites Formelement (37) der zweiten Gattung aufweist, wobei die Formelemente (33, 34) der ersten Gattung jeweils wechselweise zusammen mit dem ersten Formelement (36) der zweiten Gattung und/oder mit dem zweiten Formelement (37) der zweiten Gattung an der Bildung einer ersten Form (31) und/oder einer zweiten Form (32) beteiligt sind.

10. Formteilautomat nach Anspruch 9,
**dadurch gekennzeichnet,**
**dass** die erste Form (31) und die zweite Form (32) simultan gebildet werden.

11. Formteilautomat nach Anspruch 9 oder 10,
**dadurch gekennzeichnet,**
**dass** mindestens zwei Formelemente (36, 37) innerhalb einer Gattung zumindest bezüglich ihrer Formgebung unterschiedlich ausgestaltet sind.
